# EUROPEAN PATENT APPLICATION

(11) **EP 1 492 226 A1**
(43) Date of publication of application: **29.12.2004**
(21) Application number: 03291535.7
(22) Date of filing: 23.06.2003
(51) Int. Cl.: H03D 13/00, H04J 3/06

(54) **A method of monitoring the frequency stability of an oscillator used for network element clock generation and generating an alarm indication**

(71) Applicant: ALCATEL, 75008 Paris (FR)
(72) Inventor: Wolf, Michael Joachim., 74395 Mundelsheim (DE); Blind, Tobias, 73266 Bissingen (DE)
(74) Representative: Brose, Gerhard

(57) **Abstract**

The invention relates to a method and a circuit BA for monitoring the frequency stability of an SDH network equipment clock generator fixed frequency local oscillator LO and for generating an alarm indication Al in case the frequency drift or fluctuation of said local oscillator LO exceeds a specified value with respect to a reference frequency signal input RO_I coming from a remote oscillator. It also relates to a redundant circuit arrangement for monitoring the frequency stability of two redundant SDH network equipment clock generator circuits; an to an SDH equipment clock generator circuit and an SDH network element comprising the circuit BA described above.

## Description

The present invention relates to a clock generator of a Synchronous Digital Hierarchy (SDH) telecommunications network equipment and more specifically to a method and a circuit for monitoring the frequency stability of the internal reference fixed frequency oscillator of said clock generator and to generate an alarm indication in case the frequency drift or fluctuation of said internal oscillator exceeds a specified value.

As Synchronous Digital Hierarchy (SDH) equipment is more and more used for synchronisation distribution in telecommunication networks, the network operators are looking for guaranteed performance. They request that any failure of any circuitry impacting the performance shall be alarmed. A very important aspect for data transmission in this type of equipment is the clock performance of the network elements. Current telecommunication standards, for example standards G.813 and G.812 of the International Telecommunications Union (ITU-T) outline requirements for timing devices used in synchronizing network equipment that operate according to the principles governed by the Synchronous Digital Hierarchy (SDH). In normal operation SDH equipment contains a slave clock traceable to a primary reference clock. In general the SDH equipment clock (SEC) will have multiple reference inputs. In the event that all links between the master and the slave clock fail, the equipment should be capable of maintaining operation (holdover) within the in standard prescribed performance limits.
More specifically, the standards require a certain least frequency stability of the SDH equipment clock generator, specially when operating in holdover mode.

SDH equipment clock generators are based on a Phase Locked Loop (PLL) circuit. Digital PLLs employ a fixed frequency reference oscillator for their digital clock synthesizer, thus the stability of the network equipment clock in holdover mode depends primarily on the stability of such internal fixed frequency oscillator. The frequency stability being understood as the spontaneous and/or environmentally caused frequency change within a given time interval. It is generally distinguished between systematic effects such as frequency drift effects (caused by radiation, pressure, temperature, humidity, power supply, charge, ageing, etc.) and stochastic frequency fluctuations which are typically characterized in time domain and/or frequency domain.

In EP 1 311 068, which is considered the closest state of the art, is disclosed a method and appartus for detecting a frequency drift of a target clock signal with respect to a reference clock signal and issuing a step out alarm binary signal depending upon a polarity of a difference between a signal having a frequency which is a difference between frequencies of the reference clock and the target clock and the divided reference-clock signal.

It is the object of the invention to provide a solution for monitoring the frequency stability of an internal PLL fixed frequency reference oscillator of the SDH equipment clock generator with respect to a second reference oscillator and trigger an alarm indication in case the frequency drift or fluctuation of the first oscillator exceeds a specified value with respect to the frequency of the second oscillator.

The object is achieved according to the invention by
a method for monitoring the frequency stability of an SDH network equipment clock generator fixed frequency local oscillator and for generating an alarm indication in case the frequency drift or fluctuation of said local oscillator exceeds a specified value with respect to a reference frequency signal input coming from a remote oscillator according to claim 1,
a circuit for monitoring the frequency stability of an SDH network equipment clock generator fixed frequency local oscillator and for generating an alarm indication in case the frequency drift or fluctuation of said local oscillator exceeds a specified value with respect to a reference frequency signal input coming from a remote oscillator according to claim 3,
a redundant circuit arrangement for monitoring the frequency stability of two redundant SDH network equipment clock generator circuits according to claim 5,
an SDH equipment clock generator circuit according to claim 6, and
an SDH network element according to claim 7.

Advantageous configurations of the invention emerge from the dependent claims, the following description and the drawings. For example, it is seen advantageous to provide a solution for monitoring the frequency stability and for generating an alarm indication in case the clocks are not compliant with a specified value of two SDH redundant equipment clock generator circuits by a redundant arrangement of the circuit according to the invention in which the oscillators under control are used as a reference for each other.

The invention can also be used to provide an alarm indication for the operator in case any of the two internal PLL fixed frequency reference oscillators falls down or is faulty.

An embodiment example of the invention is now explained with the aid of Figures 1 to 3.

Fig. 1 shows a block diagram of a circuit for monitoring the stability of a fixed frequency oscillator and generating an alarm indication according to the invention.

Fig. 2 shows an example of two signal waveforms at determined points of the circuit shown in Figure 1.

Fig. 3 shows a block diagram of a redundant arrangement of a circuit for monitoring the stability of a fixed frequency oscillator and generating an alarm indication according to the invention.

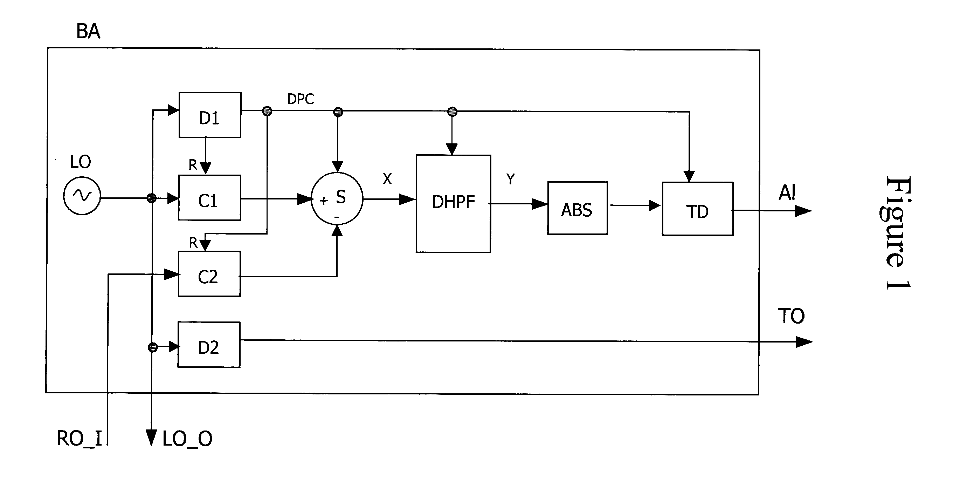

Figure 1 shows a block diagram of a circuit BA comprising a fixed frequency local oscillator LO connected to a first digital counter C1, to two frequency dividers D1 and D2 and to a local oscillator signal output LO_O. The circuit BA further comprises a reference frequency signal input RO_I connected to a second counter C2. The outputs of the counters C1 and C2 are connected to a subtractor S whose output X is connected to a digital high pass filter DHPF, the output Y of said high pass filter being connected to a rectification module ABS which outputs a signal to a threshold detector TD, the output of whom is the alarm signal output Al of the circuit BA. The circuit BA also provides a test output signal TO.

The idea is to detect frequency changes of the local oscillator LO by comparing it to a reference frequency signal input RO_I coming from a remote oscillator. The local oscillator LO frequency output triggers a first counter C1 and the reference frequency signal input RO_I triggers a second counter C2 over a certain measurement time interval T indicated by the digital processing clock signal DPC . The output X of the subtractor S, triggered by the digital processing clock signal DPC at every measurement time interval T, will give the difference value of both counters which is proportional to the frequency offset between both frequency signals.

The digital processing clock signal DPC further triggers the digital high pass filter DHPF and the threshold detector TD and is connected to the reset input R of the counters C1 and C2 in order to initialize them and start the measurements for the new time interval T. Measurement time interval T is the inverse of the frequency of the digital processing clock signal DPC which is the frequency of the local oscillator LO divided by a factor N, output of the first frequency divider D1.

A digital high pass filter DHPF follows the subtractor S for removing the steady state offset between both counter values, i.e. the steady state difference frequency offset. The output Y of the high pass filter DHPF reflects the relative frequency fluctuation of both oscillators against each other.

The output signal Y of the high pass filter DHPF is then rectified by a rectifier module ABS which takes the absolute value of the signal and passes it to a threshold detector TD which is in charge of detecting if the input signal crosses a certain specified value which indicates the threshold which the frequency change of the local oscillator LO shall not cross in order to be compliant with the stability requirements for this network equipment clock generator.

In case the signal entering the threshold detector TD crosses said threshold an alarm indication Al will be generated. This indication can be used for example to activate a visual and/or textual alarm indication in an operator display. An alarm indication Al will be generated as long as the frequency drift or fluctuation of the local oscillator LO crosses the specified value.

Though, not needed for monitoring and alarm generation, a test output signal TO is provided in the circuit BA for test purposes. When the operator receives an alarm he may want to check the actual frequency of the local oscillator LO. The frequency of the test output signal TO, which is the output of the second frequency divider D2 will be the frequency of the local oscillator LO divided by a factor N, where N is an integer. Local oscillator signal output LO_O is also alternatively provided for interconnection purposes.

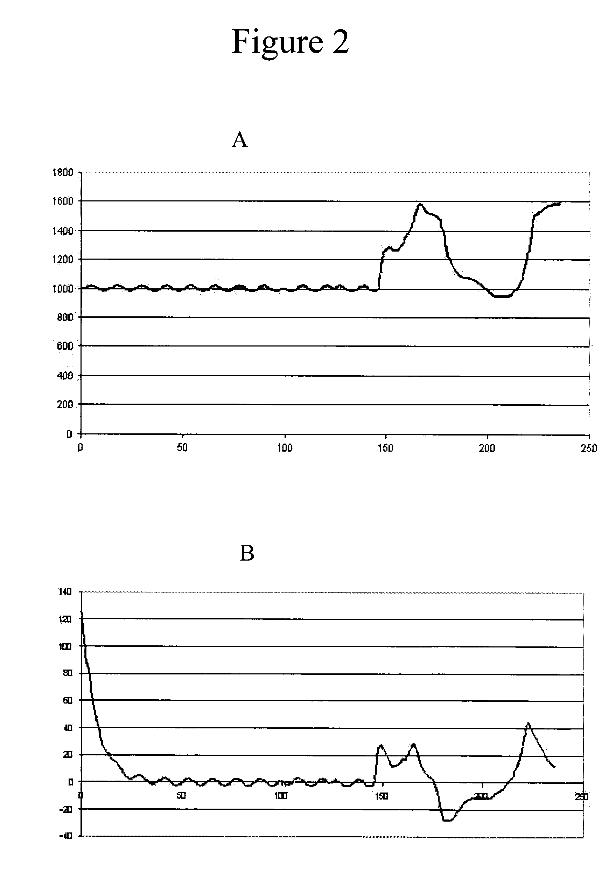

Figure 2 A,B shows an example of two signal waveforms, signal output X and signal output Y of subtractor S and the digital high pass filter DHPF respectively of the circuit BA of Figure 1 according to the invention.

In Figure 2A we can see an example of a signal output X of subtractor S which shows the difference of the counter measurements of the counters C1 and C2 (vertical axis) at measurement time intervals T (horizontal axis).

Figure 2B shows an example of signal output Y of the digital high pass filter DHPF. We can see the effect of the digital high pass filter when signal X of figure 2A is entered. It emphasizes sharp changes between the values of both counters and the steady state offset between both counter values is removed.

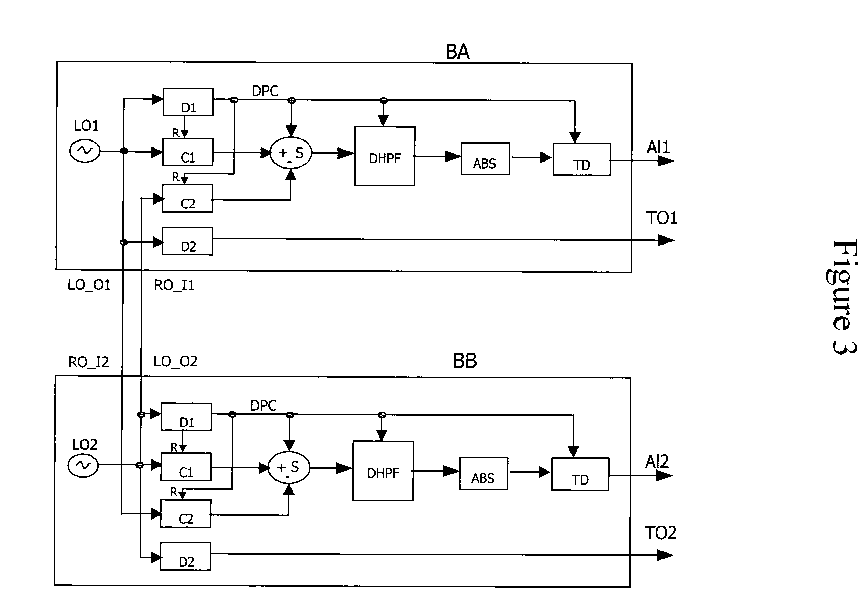

Figure 3 shows a block diagram of a redundant arrangement of a first circuit BA and a second circuit BB for monitoring the stability of a first fixed frequency local oscillator LO1 and a second fixed frequency local oscillator LO2 and generating an alarm indication Al1 or AI2 in case the frequency drift or fluctuation of the local oscillators LO1 or LO2 with respect to each other exceeds a specified value.

Because most of the telecommunications network equipment transmission circuits are redundant in order to avoid the equipment to be inoperative in case one of these circuits falls down, the invention also allows to control the stability of two redundant SDH equipment clock generator circuits by letting the fixed frequency local oscillators LO1 or LO2 be the reference for each other. This can be achieved, as shown in the figure, by connecting the first circuit BA reference frequency signal input RO_I1 to the second circuit BB local oscillator signal output LO_O2 and vice versa.

Because of the arrangement in Figure 3 the circuits BA and BB can also generate an alarm Al1 and Al2 if any of the local oscillators LO1 or LO2 falls down or is faulty. In such a case, when an alarm is generated, the operator has the possibility to check the actual frequency of the local oscillators LO1 and LO2 at test outputs TO1 and TO2 respectively in order to identify which one is down or not working properly.

## Claims

1. A method for monitoring the frequency stability of an SDH network equipment clock generator fixed frequency local oscillator (LO) and for generating an alarm indication (Al) in case the frequency drift or fluctuation of said local oscillator (LO) exceeds a specified value with respect to a reference frequency signal input (RO_I) coming from a remote oscillator **characterized by**
stimulating a first counter (C1) with the local oscillator (LO) frequency and a second counter (C2) with the reference frequency signal input (RO_I) over a certain measurement time interval;
subtracting the output value of both counters by a subtractor (S);
filtering the output signal (X) of subtractor (S) by a digital high pass filter (DHPF);
rectifying the output signal (Y) of the digital high pass filter (DHPF) by a rectifier module (ABS);
comparing if the output signal of the rectifier module (ABS) is greater than a specified value and generating an alarm indication (Al) in such case

2. The method of claim 1 **characterized in that** the measurement time interval is indicated by a digital processing clock signal (DPC) whose frequency is the frequency of the local oscillator (LO) divided by a factor N.

3. A circuit (BA) for monitoring the frequency stability of an SDH network equipment clock generator fixed frequency local oscillator (LO) and for generating an alarm indication (Al) in case the frequency drift or fluctuation of said local oscillator (LO) exceeds a specified value with respect to a reference frequency signal input (RO_I) coming from a remote oscillator **characterized in that** it comprises
a first digital counter (C1) connected to the local oscillator (LO);
a second digital counter (C2) connected to a reference frequency signal input (RO_I) coming from an external oscillator;
a subtractor (S) for subtracting the output values of the counters (C1) and (C2);
a digital high pass filter (DHPF) for filtering the output signal (X) of the subtractor (S);
a rectifier module (ABS) for rectifying the output signal (Y) of the digital high pass filter (DHPF);
a threshold detector (TD) for detecting if the output signal of the rectifier module (ABS) crosses a determined value and for generating an alarm indication (Al) in such a case;
a first frequency divider (D1 ) connected to the local oscillator (LO) for generating a digital processing clock signal (DPC) connected to subtractor (S), digital high pass filter (DHPF) and threshold detector (TD) for measurement step indication and counters (C1) and (C2) for reset indication.

4. The circuit BA of claim 3 **characterized in that** it also comprises
a second frequency divider (D2) connected to the local oscillator (LO) which generates a test output signal (TO) for test purposes; and
a local oscillator signal output (LO_O) connected to the local oscillator (LO) for interconnection purposes.

5. A redundant circuit arrangement for monitoring the frequency stability of two redundant SDH network equipment clock generator circuits **characterized in that** a first circuit (BA) according to claim 4 is connected to an identically constructed redundant second circuit (BB) in a way that a first reference frequency signal input (RO_I1) of the first circuit (BA) is connected to a second local oscillator signal output (LO_O2) of the second circuit (BB) and a first local oscillator signal output (LO_O1) of the first circuit (BA) is connected to a second reference frequency signal input (RO_I2) of the second circuit (BB).

6. An SDH equipment clock generator circuit **characterized in that** it comprises a circuit (BA) for monitoring the frequency stability of a fixed frequency local oscillator (LO) and for generating an alarm indication (Al) in case the frequency drift or fluctuation of said local oscillator (LO) exceeds a specified value with respect to a reference frequency signal input (RO_I) coming from a remote oscillator according to claim 3.

7. An SDH network element **characterized in that** it comprises an SDH clock generation circuit according to claim 6.
